# EUROPÄISCHE PATENTANMELDUNG

(11) **EP 4 421 132 A2**
(43) Veröffentlichungstag der Anmeldung: **28.08.2024**
(21) Anmeldenummer: 24155819.6
(22) Anmeldetag: 05.02.2024
(51) Int. Cl.: C09D 4/00, C09D 5/10, C09D 7/61, C23C 26/00, B05D 1/02, B05D 1/28, B05D 3/06

(54) **VERFAHREN ZUM ZUMINDEST BEREICHSWEISEN ERZEUGEN EINER OXIDATIONSSCHUTZSCHICHT AUF EINEM BAUTEIL EINER THERMISCHEN GASTURBINE**

(30) Priorität: 24.02.2023 DE 102023104545
(71) Anmelder: MTU Aero Engines AG, 80995 München (DE)
(72) Erfinder: Weidlich, Nils, 30855 Langenhagen (DE); Seidel, Frank, 30855 Langenhagen (DE); Schoening, Ezgi, 30855 Langenhagen (DE)

(57) **Zusammenfassung**

Die Erfindung betrifft ein Verfahren zum zumindest bereichsweisen Erzeugen einer Oxidationsschutzschicht (10) auf einem Bauteil (12) einer thermischen Gasturbine. Das Verfahren umfasst erfindungsgemäß die Schritte zumindest bereichsweises Beschichten des Bauteils (12) mit einem Lack (22), welcher zumindest ein UV-aushärtbares Bindemittel (24) und Metallpartikel (16) umfasst, Aushärten des Lacks (22) durch Beaufschlagen (18) mit UV-Licht und Wärmebehandeln des Bauteils (12) zumindest im Bereich des ausgehärteten Lacks (22) zum Erzeugen der Oxidationsschutzschicht (10).

## Beschreibung

Die Erfindung betrifft ein Verfahren zum zumindest bereichsweisen Erzeugen einer Oxidationsschutzschicht auf einem Bauteil einer thermischen Gasturbine.

Viele Triebwerkskomponenten thermischer Gasturbinen sind im Betrieb hohen Temperaturen und Drücken ausgesetzt. Daher werden sie mit einer Oxidationsschutzschicht versehen, die zumindest bereichsweise auf der Oberfläche des entsprechenden Bauteils oder auf der gesamten Oberfläche des Bauteils erzeugt wird. Bei der Wartung bzw. Reparatur solcher Bauteile muss an beschädigten Bereichen häufig die Oxidationsschutzschicht lokal oder vollständig entfernt werden. Um weiterhin einen ausreichenden Schutz des Grundmaterials des Bauteils zu garantieren, muss vor Beendigung der Reparatur die Oxidationsschutzschicht auf diesen Bereichen wiederhergestellt werden ("Touch-Up Coating"). Zur lokalen Beschichtung werden dabei typischerweise thermisch aushärtender Schlicker mit Metallpartikeln als Füllstoff verwendet. Der Schlicker wird in mehreren Lagen mit jeweiligen Zwischentrocknungsschritten auf den entsprechenden Bereich des Bauteils aufgebracht. Die Zwischentrocknungsschritte sind hierbei relevant, um die gewünschte Mindestschichtdicke der Oxidationsschutzschicht auf dem Bauteil schrittweise erreichen zu können. Zum Erreichen einer ausreichenden Schichtstärke sind oft bis zu vier oder mehr Lagen Schlicker notwendig, da die stabile Dicke der Schlicker-Lagen auf ca. 20 µm oder weniger begrenzt ist. In einer anschließenden Wärmebehandlung diffundieren die Metallpartikel in den als Substrat dienenden Grundwerkstoff des Bauteils und bilden die schützende Oxidationsschutzschicht.

Ein Problem an dem bisherigen Verfahren besteht darin, dass die Beschichtung des Bauteils mit dem Schlicker durch die benötigte Anzahl an Lagen sehr aufwendig, fehleranfällig und in seiner maximal erreichbaren Beschichtungsdicke stark limitiert ist, da jede zusätzliche Lage immer weniger an Schichtdickenzuwachs liefert. Daher ist die erforderliche Nacharbeitsquote teils hoch.

Aufgabe der vorliegenden Erfindung ist es, ein einfacheres, schnelleres und weniger fehleranfälliges Verfahren zum zumindest bereichsweisen Erzeugen einer Oxidationsschutzschicht auf einem Bauteil einer thermischen Gasturbine zu schaffen.

Die Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den Unteransprüchen angegeben.

Ein erster Aspekt der Erfindung betrifft ein Verfahren zum zumindest bereichsweisen Erzeugen einer Oxidationsschutzschicht auf einem Bauteil einer thermischen Gasturbine. Erfindungsgemäß umfasst das Verfahren zumindest die Schritte zumindest bereichsweises Beschichten des Bauteils mit einem Lack, welcher zumindest ein UV-aushärtbares Bindemittel und Metallpartikel umfasst, Aushärten des Lacks durch Beaufschlagen mit UV-Licht und Wärmebehandeln des Bauteils zumindest im Bereich des ausgehärteten Lacks zum Erzeugen der Oxidationsschutzschicht. Mit anderen Worten ist es erfindungsgemäß vorgesehen, dass anstelle der derzeit verwendeten thermisch aushärtenden Schlicker oder Slurries ein UV-härtbarer Lack zum teilweisen oder vollständigen Beschichten des Bauteils verwendet wird, welches nach dem Aushärten des Lacks durch Beaufschlagen mit UV-Licht einer Wärmebehandlung unterzogen wird, um die finale Oxidationsschutzschicht auszubilden. Das erfindungsgemäße Verfahren kann einfacher, schneller und weniger fehleranfällig durchgeführt werden, da durch die Verwendung des UV-aushärtbaren Lacks in weniger Auftragsschritten und ohne die Notwendigkeit von Zwischentrocknungsschritten insgesamt dickere Schichtdicken und damit höhere Schichtqualitäten der finalen Oxidationsschutzschicht erzielt werden können. Generell sind "ein/eine" im Rahmen dieser Offenbarung als unbestimmte Artikel zu lesen, also ohne ausdrücklich gegenteilige Angabe immer auch als "mindestens ein/mindestens eine". Um-gekehrt können "ein/eine" auch als "nur ein/nur eine" verstanden werden.

In einer vorteilhaften Ausgestaltung der Erfindung ist vorgesehen, dass ein Lack zum Beschichten verwendet wird, welcher zusätzlich wenigstens ein Lösungsmittel und/oder ein Additiv und/oder einen Füllstoff und/oder einen Photoinitiator umfasst. Hierdurch können die physikalischen und chemischen Eigenschaften des Lacks optimal an den jeweiligen Einsatzzweck angepasst werden. Die Viskosität und Verarbeitbarkeit des Lacks kann vorteilhaft durch die Wahl und den Gewichtsanteil des Lösemittels beeinflusst werden. Die Auswahl eines Photoinitiators als Additiv gewährleistet die zuverlässige Initiierung einer Polymerisation des Bindemittels durch UV-Strahlung. Durch die Bildung von Quervernetzungen innerhalb des Bindemittels wird der Lack hierdurch ausgehärtet. Mit Hilfe eines oder mehrerer Füllstoffe können die Auftragungseigenschaften des Lacks sowie die Eigenschaften der späteren Oxidationsschutzschicht beeinflusst und ebenfalls optimal an den jeweiligen Einsatzzweck angepasst werden. Alternativ oder zusätzlich kann vorgesehen sein, dass ein Bindemittel verwendet wird, welches wenigstens ein Oligomer und/oder wenigstens ein Präpolymere umfasst. Hier sind beispielhaft insbesondere UV-aushärtbare Harze und/oder (Meth)Acrylatverbindungen zu nennen, die sich besonders gut als Bindemittel für den Lack des vorliegenden Verfahrens eignen.

In einer weiteren vorteilhaften Ausgestaltung der Erfindung ist vorgesehen, dass der Lack mittels einer Sprüheinrichtung und/oder mittels eines Pinsels auf das Bauteil aufgetragen wird. Dies stellt eine flexible, einfache und kostengünstige Möglichkeit zum lokalen Beschichten des Bauteils dar. Alternativ oder zusätzlich ist vorgesehen, dass der Lack mit einer Schichtdicke zwischen 50 µm und 250 µm, insbesondere zwischen 70 µm und 200 µm auf das Bauteil aufgetragen wird. Hierdurch wird eine Schichtdicke- bzw. Schichtstärke erreicht, welche die nachfolgende Ausbildung einer besonders zuverlässigen Oxidationsschutzschicht sicherstellt. Vorzugsweise ist es in weiterer Ausgestaltung vorgesehen, dass nur eine einzige Lage des Lacks auf das Bauteil aufgetragen wird. Der im Rahmen des erfindungsgemäßen Verfahrens verwendete Lack erlaubt es im Unterschied zum Stand der Technik, mit dem Auftrag einer einzigen Lage eine ausreichende Schichtdicke sicherzustellen. Hierdurch können erhebliche Zeit- und Kostenvorteile realisiert und die Nachbearbeitungsquoten erheblich reduziert werden.

In einer weiteren vorteilhaften Ausgestaltung der Erfindung wird ein Lack verwendet, welcher bei einer Temperatur zwischen 5 °C und 30 °C eine dynamische Viskosität zwischen 1000 mPa*s und 2000 mPa*s besitzt. Hierdurch ist eine besonders gute Verarbeitbarkeit des Lacks im Rahmen des erfindungsgemäßen Verfahrens sichergestellt, da der Lack einerseits nicht zu dünnflüssig, andererseits aber auch nicht zu dickflüssig zum Auftragen ist. Die Viskosität des Lacks kann mit einem Viskosimeter z. B. gemäß EN ISO 3219 gemessen werden.

Weitere Vorteile ergeben sich dadurch, dass als Metallpartikel Aluminiumpartikel verwendet werden und/oder dass ein Gewichtsanteil der Metallpartikel am Gesamtgewicht des Lacks zwischen 20 Gew.-% und 70 Gew.-% beträgt und/oder dass die Metallpartikel eine mittlere Partikelgröße von bis zu 1 µm besitzen. Hierdurch können besonders zuverlässige Oxidationsschutzschichten mit hoher Schichtqualität hergestellt werden. Für die Ermittlung der mittleren Partikelgröße wird bei runden Metallpartikeln der Durchmesser und bei unrund bzw. unregelmäßig geformten Metallpartikeln der volumenäquivalente Kugeldurchmesser der Metallpartikel zugrundegelegt.

Eine besonders schnelle und zuverlässige Aushärtung des Lacks wird in weiterer Ausgestaltung der Erfindung dadurch gewährleistet, dass der Lack zum Aushärten mit UV-Licht einer Wellenlänge zwischen 200 nm und 400 nm, vorzugsweise im Bereich zwischen 350 und 380 nm beaufschlagt wird.

Weitere Vorteile ergeben sich dadurch, dass das Wärmebehandeln ein Diffusionsglühverfahren zur Ausbildung der Oxidationsschutzschicht umfasst. Mit Hilfe eines Diffusionsglühverfahrens, das auch als Lösungsglühen, Homogenisieren, oder Ausgleichsglühen bezeichnet wird, kann das Bindemittel des Lacks, welches die Metallpartikel nach dem Auftragen des Lacks zunächst zusammenhält, zersetzt bzw. verbrannt werden (Entbinderung). Die verbleibenden Metallpartikel werden homogen auf der Oberfläche des Bauteils verteilt, diffundieren teilweise in das Bauteil ein und bilden die Oxidationsschutzschicht aus.

Dabei hat es sich in weiterer Ausgestaltung als vorteilhaft gezeigt, wenn das Diffusionsglühverfahren ein Temperieren des Bauteils auf eine Temperatur zwischen 800 °C und 1000 °C umfasst und/oder wenn das Diffusionsglühverfahren mindestens für eine Stunde, vorzugsweise für mehrere Stunden, durchgeführt wird und/oder wenn das Diffusionsglühverfahren unter Schutzgasatmosphäre, insbesondere unter Argon-Atmosphäre, durchgeführt wird. Hierdurch wird eine besonders hohe und zuverlässige Schutzwirkung der Oxidationsschutzschicht erreicht.

In weiterer Ausgestaltung der Erfindung ist vorgesehen, dass die erzeugte Oxidationsschutzschicht zumindest eine Diffusionsschicht und eine Aufbauschicht umfasst. Mit anderen Worten kann die Oxidationsschutzschicht zwei oder mehr Schichten bzw. Zonen umfassen, nämlich insbesondere eine Diffusionsschicht sowie eine Aufbau- oder Deckschicht. Der Aufbau der Diffusionsschicht oder -zone sowie der Aufbauschicht oder -zone wird generell durch den Grundwerkstoff des Bauteils, durch das Material der verwendeten Metallpartikel sowie durch die Dauer und Temperatur des Wärmebehandlungsverfahrens bestimmt.

Weitere Vorteile ergeben sich, indem das erfindungsgemäße Verfahren im Rahmen einer Herstellung, Wartung und/oder Reparatur des Bauteils durchgeführt wird. Mit anderen Worten kann das erfindungsgemäße Verfahren nicht nur im Rahmen einer Reparatur des Bauteils, sondern auch bei einer Wartung und sogar bei der erstmaligen Herstellung des Bauteils zur Erzeugung der Oxidationsschutzschicht verwendet werden.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische Darstellung eines aus dem Stand der Technik bekannten Verfahrens zum Erzeugen einer Oxidationsschutzschicht auf einem Bauteil einer thermischen Gasturbine; und
- Fig. 2: eine schematische Darstellung eines erfindungsgemäßen Verfahrens zum Erzeugen einer Oxidationsschutzschicht auf einem Bauteil einer thermischen Gasturbine.

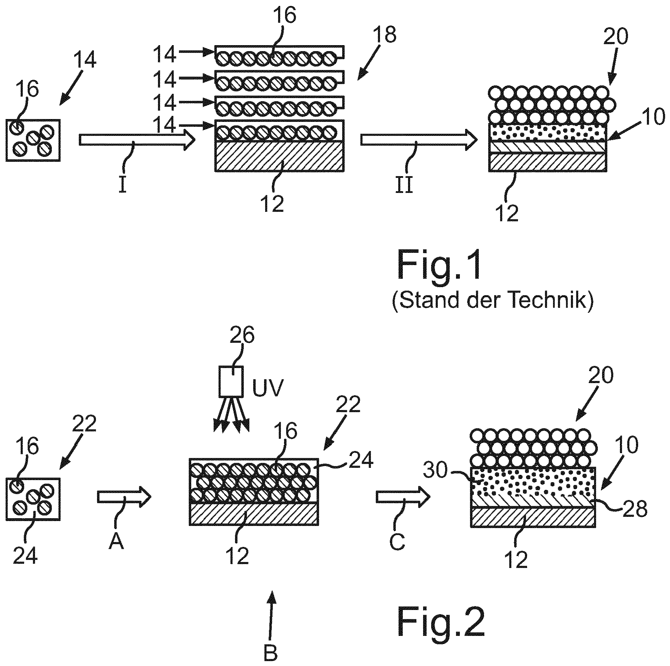

**FIG. 1** zeigt eine schematische Darstellung eines aus dem Stand der Technik bekannten Verfahrens zum Erzeugen einer Oxidationsschutzschicht 10 auf einem Bauteil 12 einer thermischen Gasturbine (nicht dargestellt). Das Bauteil 12 kann ein Triebwerks- bzw. Gasturbinenbauteil wie beispielsweise ein Schaufelblatt sein. Zur lokalen Beschichtung von solchen Triebwerks- und Gasturbinenkomponenten wird bislang ein sogenanntes "Touch-Up Coating" eingesetzt. Dieses beruht auf einem thermisch aushärtenden Schlicker 14 (Slurry), der Metallpartikel 16 enthält und in Schritt I lokal in mehreren Lagen 18 auf das betroffene Bauteil 12 aufgebracht wird, wobei nach dem Aufbringen jeder Lage 18 ein Zwischentrocknungsschritt erfolgt. Zum Erreichen einer ausreichenden Schichtstärke sind dabei oft vier oder mehr Lagen 18 des Schlickers 14 mit entsprechenden Zwischentrocknungsschritten notwendig, da die stabile Dicke der Schlicker-Lagen 18 auf etwa 20 µm oder weniger begrenzt ist. Sobald die gewünschte Schichtdicke erreicht ist, erfolgt in Schritt II eine Wärmebehandlung, in welcher die Oxidationsschutzschicht 10 auf dem als Substrat fungierenden Bauteil 12 erzeugt wird. Auf der Oxidationsschutzschicht 10 verbeiben in der Regel sogenannte "leere Oxidhüllen" 20, bei denen es sich um Schlackereste bzw. Materialreste handelt, die nach der Wärmebehandlung auf der Oxidationsschutzschicht 10 zurückbleiben und beispielsweise durch Strahlen oder dergleichen entfernt werden können. Dieser bekannte Beschichtungsprozess ist durch die erforderliche Anzahl an Lagen 18 sehr aufwendig, fehleranfällig und in seiner finalen Beschichtungsdicke stark limitiert, da jede zusätzliche Lage 18 immer weniger an Schichtdicke liefert. Die Nacharbeitsquote liegt zudem bei den derzeitig eingesetzten Slurries 14 bei bis zu 40 %.

**Fig. 2** zeigt eine schematische Darstellung eines erfindungsgemäßen Verfahrens zum Erzeugen einer Oxidationsschutzschicht 10 auf einem Bauteil 12 einer thermischen Gasturbine. Im Unterschied zum in Fig. 1 gezeigten Verfahren wird hier ein Lack 22 verwendet, welcher ein UV-härtbares, organisches Bindemittel 24 umfasst, in welchem die Metallpartikel 16, bei denen es sich im gezeigten Beispiel um Aluminiumpartikel handelt, dispergiert vorliegen. Das Bindemittel 24 kann hierbei aus einem Oligomer oder einem Präpolymere bestehen, beispielsweise aus einem Harz und/oder einer (Meth)Acrylatverbindung. Optional kann der Lack 22 weitere Komponenten wie Lösungsmittel, Additive, Füllstoffe und/oder Photoinitiatoren, einzeln und in beliebiger Kombination, enthalten. Der Lack 22 besitzt eine dynamische Viskosität zwischen 1000mPa*s und 2000 mPa*s bei 15 °C bis 30 °C und kann durch Sprühen (z. B. Spraycoating) und/oder Lackieren (z. B. mit einem Pinsel) in Schritt A auf das Bauteil 12 bzw. auf einen lokalen Bereich des Bauteils 12 aufgebracht werden. Dies kann beispielsweise im Rahmen einer Reparatur des Bauteils 12 erfolgen. Die dabei in einem einzigen Durchgang erreichbare Schichtdicke beträgt üblicherweise zwischen 70 µm und 200 µm oder mehr, so dass es in der Regel ausreicht, eine einzige Lage 18 aufzubringen. Auf Zwischentrocknungsschritte kann dementsprechend vollständig verzichtet werden. Der Gewichtsanteil der Metallpartikel 16 am Gesamtgewicht des Lacks 22 beträgt je nach Anwendung zwischen etwa 20 Gew.-% und etwa 70 Gew.-%. Die mittlere Partikelgröße der Metallpartikel 16 beträgt vorzugsweise bis zu 1 µm.

Nach dem Auftragen wird der Lack 22 bzw. sein Bindemittel 24 in Schritt B ausgehärtet. Dies erfolgt durch Beaufschlagen des Lacks 22 mit UV-Strahlung. Die Wellenlänge der UV-Strahlung beträgt für die Vernetzung zwischen 200 nm und 400 nm, insbesondere etwa 365 nm. Hierzu kann eine entsprechende UV-Bestrahlungseinrichtung 26 verwendet werden. Das Vorsehen eines Photoinitiators im Lack 22 ermöglicht dabei die Initiierung einer Polymerisationsreaktion durch die UV-Strahlung. Durch die Bildung von Quervernetzungen innerhalb des Bindemittels 24 wird der Lack 22 dann ausgehärtet.

Im nachfolgenden Schritt C erfolgt ein Diffusionsglühen als Wärmebehandlung zur Ausbildung der Oxidationsschutzschicht 10. Das Diffusionsglühen wird dazu bei einer Temperatur zwischen 800 °C und 1000 °C für eine oder mehrere Stunden unter Schutzgasatmosphäre (Argon) durchgeführt. Dabei diffundiert Aluminium in den Grundwerkstoff des Bauteils 12 und bildet eine Diffusionsschicht 28 sowie eine Aufbau- bzw. Deckschicht 30. Auch hier können auf der Oxidationsschutzschicht 10 leere Oxidhüllen 20 verbleiben, die beispielsweise durch Strahlen oder dergleichen entfernt werden können.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der vorliegenden Erfindung mitumfasst anzusehen.

### Bezugszeichenliste:

- 10: Oxidationsschutzschicht
- 12: Bauteil
- 14: Schlicker
- 16: Metallpartikel
- 18: Lage
- 20: leere Oxidhüllen
- 22: Lack
- 24: Bindemittel
- 26: UV-Bestrahlungseinrichtung
- 28: Diffusionsschicht
- 30: Aufbauschicht
- A, B, C: Schritt
- I, II: Schritt

## Patentansprüche

1. Verfahren zum zumindest bereichsweisen Erzeugen einer Oxidationsschutzschicht (10) auf einem Bauteil (12) einer thermischen Gasturbine, umfassend die Schritte:
- zumindest bereichsweises Beschichten des Bauteils (12) mit einem Lack (22), welcher zumindest ein UV-aushärtbares Bindemittel (24) und Metallpartikel (16) umfasst;
- Aushärten des Lacks (22) durch Beaufschlagen (18) mit UV-Licht; und
- Wärmebehandeln des Bauteils (12) zumindest im Bereich des ausgehärteten Lacks (22) zum Erzeugen der Oxidationsschutzschicht (10).

2. Verfahren nach Anspruch 1,
**dadurch gekennzeichnet, dass**
ein Lack (22) zum Beschichten verwendet wird, welcher zusätzlich wenigstens ein Lösungsmittel und/oder ein Additiv und/oder einen Füllstoff und/oder einen Photoinitiator umfasst, und/oder dass ein Bindemittel (24) verwendet wird, welches wenigstens ein Oligomer und/oder wenigstens ein Präpolymere umfasst.

3. Verfahren nach Anspruch 1 oder 2,
**dadurch gekennzeichnet, dass**
der Lack (22) mittels einer Sprüheinrichtung und/oder mittels eines Pinsels auf das Bauteil (12) aufgetragen wird und/oder dass der Lack (22) mit einer Schichtdicke zwischen 50 µm und 250 µm, insbesondere zwischen 70 µm und 200 µm auf das Bauteil (12) aufgetragen wird und/oder dass nur eine einzige Lage (18) des Lacks (22) auf das Bauteil (12) aufgetragen wird.

4. Verfahren nach einem der Ansprüche 1 bis 3,
**dadurch gekennzeichnet, dass**
ein Lack (22) verwendet wird, welcher bei einer Temperatur zwischen 5 °C und 30 °C eine dynamische Viskosität zwischen 1000 mPa*s und 2000 mPa*s besitzt.

5. Verfahren nach einem der Ansprüche 1 bis 4,
**dadurch gekennzeichnet, dass**
als Metallpartikel (16) Aluminiumpartikel verwendet werden und/oder dass ein Gewichtsanteil der Metallpartikel (16) am Gesamtgewicht des Lacks (22) zwischen 20 Gew.-% und 70 Gew.-% beträgt und/oder dass die Metallpartikel (16) eine mittlere Partikelgröße von bis zu 1 µm besitzen.

6. Verfahren nach einem der Ansprüche 1 bis 5,
**dadurch gekennzeichnet, dass**
der Lack (22) zum Aushärten mit UV-Licht einer Wellenlänge zwischen 200 nm und 400 nm beaufschlagt wird.

7. Verfahren nach einem der Ansprüche 1 bis 6,
**dadurch gekennzeichnet, dass**
das Wärmebehandeln ein Diffusionsglühverfahren zur Ausbildung der Oxidationsschutzschicht (10) umfasst.

8. Verfahren nach Anspruch 7,
**dadurch gekennzeichnet, dass**
das Diffusionsglühverfahren ein Temperieren des Bauteils (12) auf eine Temperatur zwischen 800 °C und 1000 °C umfasst und/oder dass das Diffusionsglühverfahren mindestens für eine Stunde, vorzugsweise für mehrere Stunden, durchgeführt wird und/oder dass das Diffusionsglühverfahren unter Schutzgasatmosphäre, insbesondere unter Argon-Atmosphäre, durchgeführt wird.

9. Verfahren nach einem der Ansprüche 1 bis 8,
**dadurch gekennzeichnet, dass**
die erzeugte Oxidationsschutzschicht (10) zumindest eine Diffusionsschicht (28) und eine Aufbauschicht (30) umfasst.

10. Verfahren nach einem der Ansprüche 1 bis 9,
**dadurch gekennzeichnet, dass**
dieses im Rahmen einer Herstellung, Wartung und/oder Reparatur des Bauteils (12) durchgeführt wird.
